# EUROPÄISCHE PATENTSCHRIFT

(11) **EP 4 218 503 B1**
(45) Veröffentlichungstag und Bekanntmachung des Hinweises auf die Patenterteilung: **17.04.2024**
(21) Anmeldenummer: 22199982.4
(22) Anmeldetag: 06.10.2022
(51) Int. Cl.: A47J 27/00, A47J 36/02, A47J 36/04, H05B 6/64

(54) **NIEDERDRUCK-DAMPFGARER**
LOW PRESSURE STEAM COOKER
CUISEUR À VAPEUR BASSE PRESSION

(30) Priorität: 28.01.2022 DE 102022101981
(43) Veröffentlichungstag der Anmeldung: 02.08.2023
(73) Patentinhaber: Denk Keramische Werkstätten e. K., 96450 Coburg (DE)
(72) Erfinder: Denk, Fabian, 96450 Coburg (DE)
(74) Vertreter: Engel, Christoph Klaus

(56) Entgegenhaltungen:
- DE-U1- 9 412 487
- KR-B1- 101 047 616
- US-A- 4 759 342
- US-A1- 2010 200 574
- US-B2- 9 622 610

## Beschreibung

Die Erfindung betrifft einen Niederdruck-Dampfgarer, bestehend aus mindestens einer Grundplatte und einer Niederdruckhaube. Die Grundplatte besitzt eine nach unten gerichtete Bodenfläche und eine nach oben gerichtete Gargutfläche. Die Gargutfläche weist eine Haubenauflagefläche mit einem umlaufenden, erhabenen Halterand sowie mindestens eine Wassermulde zur Aufnahme von Wasser auf. Die Niederdruckhaube besitzt einen Aufsetzrand, dessen Kontur komplementär zum Verlauf des Halterands der Grundplatte geformt ist, sodass der Aufsetzrand vom Halterand umschlossen ist, wenn der Aufsetzrand der Niederdruckhaube auf der Haubenauflagefläche der Grundplatte aufsitzt.

In der Praxis gibt es zahlreiche Gefäße und Geräte, die bei der Zubereitung von Speisen verwendet werden. Für die Erhitzung von Lebensmitteln sind neben klassischen Backöfen und Mikrowellengeräten auch sogenannte Dampfgarer bekannt, in deren Garraum eine Wasserdampfatmosphäre erzeugt wird, um z. B. Gemüse schonend zu erhitzen. Diese Dampfgarer sind technisch aufwendig und beanspruchen Raum in der Küche. Darüber hinaus gibt es auch Vorrichtungen, die ein Wasservolumen enthalten und mit denen Speisen in einen Backofen gestellt werden, um dort eine Wasserdampfatmosphäre nachzubilden. Der dabei umfangreich austretende Wasserdampf kann aber zur Beschädigung des für diese Anwendungen nicht konzipierten Backofens führen. Außerdem kann kein über den Raumdruck nennenswert hinausgehender Dampfdruck erzeugt werden, was sich nachteilig auf die Garzeit und das Garergebnis auswirkt.

Aus der US 2017/071405 A1 ist ein Dampfdeckel bekannt, der zwei gegenüberliegende konkave Räume umfasst, von denen einer der konkaven Räume zum Abdecken von Speisen verwendet wird und der andere konkave Raum als Flüssigkeitsreservoir, insbesondere für Wasser dient. Über einen Flüssigkeitskanal, der beide Räume verbindet, kann das Wasser auf eine heiße Oberfläche gelangen und dort verdampfen.

Die JP 2013-255626 A beschreibt einen keramischen Behälter. Der Behälter wird durch mehrere Schichten gebildet, wobei auf einer Basisschicht eine Heizelementschicht und auf dieser eine weitere Schicht aufgebracht ist. Insbesondere ist der Behälter für den Gebrauch in Mikrowellen-Geräten nutzbar.

Aus der JP 2005-328880 A ist ein hitzebeständiger, keramischer Behälter bekannt, der zum Erhitzen von Nahrungsmitteln in Mikrowellen-Geräten zum Einsatz kommt.

In der US 2019/0183152 A1 wird ein Grillzubehör beschrieben. Das Grillzubehör umfasst eine Abdeckung, die unter der Abdeckung einen Dampfbereich bildet. Weiterhin umfasst das Grillzubehör einen Dampfgenerator mit mindestens einer Entlüftungsöffnung, wobei der Dampfgenerator Flüssigkeiten unter der Abdeckung aufnimmt und hält. Der im Dampfgenerator erzeugte Dampf gelangt über die Entlüftungsöffnung in den Dampfbereich.

KR 101 047 616 B1 offenbart einen Dampfgarer zum Erhitzen von Nahrungsmitteln in Mikrowellen-Geräten.

Eine Aufgabe der vorliegenden Erfindung wird ausgehend von den festgestellten Mängeln darin gesehen, einen Niederdruck-Dampfgarer bereitzustellen, der sowohl in einem Backofen als auch in einem Mikrowellengerät verwendbar ist, der eine mit Niederdruck beaufschlagte Wasserdampfatmosphäre bereitstellt, in welcher ein Gargut in kurzer Zeit zubereitet werden kann, ohne dass es zu einem übermäßigen Austritt von Wasserdampf kommt.

Diese Aufgabe wird durch einen Niederdruck-Dampfgarer gemäß dem beigefügten Anspruch 1 gelöst. Bevorzugte Ausführungsformen der Erfindung sind in den abhängigen Ansprüchen genannt und nachfolgend näher beschrieben.

Der erfindungsgemäße Niederdruck-Dampfgarer umfasst zunächst eine Grundplatte mit einer im Betriebszustand nach unten gerichteten Bodenfläche und einer dieser gegenüberliegenden Gargutfläche. Auf die Gargutfläche wird das Gargut aufgelegt, beispielsweise Gemüse, Kartoffeln oder ähnliche in heißem Wasserdampf zuzubereitende Speisen. Die Gargutfläche besitzt eine Haubenauflagefläche mit einem umlaufenden, erhabenen Halterand und mindestens eine Wassermulde zur Aufnahme von Wasser, welches während des Garvorgangs verdampft wird.

Ein weiterer Bestandteil des Niederdruck-Dampfgarers ist eine Niederdruckhaube mit einem schüsselförmigen Haubenvolumen und einem Aufsetzrand, dessen Kontur komplementär zum Verlauf des Halterands der Grundplatte geformt ist. Wenn für den Garvorgang die Niederdruckhaube auf die Grundplatte aufgesetzt wird, so ist der Aufsetzrand der Niederdruckhaube vom Halterand umschlossen.

Wesentlich für die Erfindung ist außerdem, dass die Grundplatte und die Niederdruckhaube jeweils einstückig gebildet sind und aus einem nicht-glasierten keramischen Material bestehen, dessen Keramikrohmasse vor dem Sinterprozess Granitmehl beigemischt wurde.

Die Wassermulde besitzt ein Wasseraufnahmevolumen im Bereich von 1% bis 2% des Haubenvolumens. Dieses Volumenverhältnis ist bedeutsam für die Funktionsweise, da auf diese Weise die richtige Wassermenge für die Dampferzeugung bereitsteht. Die zueinander gerichteten Oberflächen des Aufsetzrandes der Niederdruckhaube sowie der Haubenauflagefläche der Grundplatte sind so geformt, dass zwischen diesen mindestens abschnittsweise ein Dampfauslassspalt verbleibt. Dieser ist erforderlich, damit der unter der Haube entstehende Wasserdampf gedrosselt entweichen kann, sodass ein geringfügig über dem Umgebungsdruck liegender Druck unter der Haube besteht, wodurch der Garvorgang begünstigt wird.

Bei der Benutzung des Niederdruck-Dampfgarers wird in die Wassermulde in der Grundplatte Wasser gefüllt. Das Gargut, z. B. Kartoffeln oder Gemüse, werden auf die Gargutfläche gelegt. Dann wird die Niederdruckhaube auf die Grundplatte gesetzt, sodass der Aufsetzrand auf der Haubenauflagefläche zu liegen kommt und das Gargut im Haubenvolumen eingeschlossen ist. Das Volumen der Wassermulde bestimmt die einfüllbare Wassermenge, welche an das Haubenvolumen erfindungsgemäß angepasst ist. Durch ein nutzbares Wasservolumen von 1% bis 2% des Haubenvolumens steht ausreichend Wasser für einen Garvorgang zur Verfügung, gleichzeitig ist das Wasser am Ende des Garvorgangs weitgehend verdampft, sodass der Niederdruck-Dampfgarer leichter aus dem Heizgerät entnommen werden kann.

Die Erwärmung des Niederdruck-Dampfgarers und des darin deponierten Garguts erfolgt im Backofen oder in einem Mikrowellengerät. Bei der Garung im Backofen verdampft das Wasser und es bildet sich unter der Haube heißer Wasserdampf. Gleichzeitig speichert die Keramik der Grundplatte und der Niederdruckhaube die vom Backofen zugeführte Wärme und gibt diese als Strahlungswärme zeitverzögert aber sehr gleichmäßig an das Gargut ab. Es hat sich gezeigt, dass nur eine im Vergleich zur Erwärmung im Wasserbad sehr geringe Wassermenge erhitzt werden muss, was erheblich zur Energieeinsparung beim Garen beiträgt.

Ebenso ist der Garvorgang mit dem Niederdruck-Dampfgarer in einem Mikrowellengerät möglich. Die energiesparende Garung im Mikrowellengerät wird durch eine besondere Eigenschaft der beim Niederdruck-Dampfgarer verwendeten Keramik, die nachfolgend auch als Granitkeramik bezeichnet wird, weiter verbessert. Im Gegensatz zu Porzellan, Glas oder Kunststoff, wird diese Keramik von Mikrowellenstrahlung angeregt und selbst erhitzt. Dadurch wirkt auf das Gargut neben der Mikrowellenstrahlung auch eine gleichmäßige Strahlungswärme, ausgehend von dem Granitkeramikmaterial, aus welchem die Grundplatte und die Niederdruckhaube gefertigt sind. Ebenso wie bei der Erwärmung im Backofen, wird Wasser aus der Wassermulde verdampft, sodass der Wasserdampf zusätzlich zur Mikrowellenstrahlung auf das Gargut einwirkt. Der Garvorgang nach diesem Prinzip erfolgt sehr schnell, energiesparend und dennoch schonender, als wenn das Gargut ausschließlich der direkten Mikrowellenstrahlung ausgesetzt wäre.

Es bildet sich im Niederdruck-Dampfgarer bei der Erwärmung Wasserdampf. Dieser kann ab dem Erreichen eines geringen Niederdrucks, beispielsweise etwa 1 bar, durch den Dampfauslassspalt entweichen, da die Niederdruckhaube nicht abdichtend auf der Grundplatte aufliegt. So bildet sich kein gefährlicher Überdruck, wie man es z. B. aus Schnellkochtöpfen kennt. Weiterhin hat das Garen unter niedrigem Dampfdruck den Vorteil, dass mögliche Verunreinigungen und Schadstoffe auf dem Gargut, z. B. auf der Kartoffelschale, nicht in das Innere des Garguts gepresst werden.

Nach dem Garvorgang kann der Niederdruck-Dampfgarer dem Backofen oder dem Mikrowellengerät entnommen werden. Zur Entnahme der gegarten Speise wird entweder die Niederdruckhaube von der Grundplatte abgehoben oder der Niederdruck-Dampfgarer wird um 180° gewendet, sodass die Speise in der Niederdruckhaube zu liegen kommt. Bevorzugt besitzt die Niederdruckhaube an ihrer dem Aufsetzrand gegenüberliegenden Oberseite eine nach Außen gerichtete Standfläche, sodass sie als Schüssel mit enthaltener Speise abgestellt werden kann. Das erwärmte Material der Niederdruckhaube hält dann die Speisen besonders lang warm.

Die Verwendung von Granitkeramik für die Niederdruckhaube und die Grundplatte bietet gegenüber anderen Materialien weitere Vorteile. Vorbekannte Garbehälter aus Kunststoffen sind nur eingeschränkt temperaturbeständig. Weiterhin beinhalten Kunststoffe zur Formung notwendige Weichmacher. Diese können bei Lebensmittelkontakt in die Lebensmittel übergehen, womit die Gefahr von gesundheitlichen Beeinträchtigungen besteht. Weiterhin kann der wahrgenommene Geschmack des Gargutes beeinträchtigt werden. Granitkeramik ist demgegenüber für Lebensmittelkontakt besonders geeignet, was durch entsprechende Prüfungen bestätigt wurde. Das Material ist chemisch inert, es findet keine Stoffmigration statt. Damit besteht keine Gefahr von gesundheitlichen oder geschmacklichen Beeinträchtigungen. Weiterhin ist die Keramik temperaturbeständig bis mindestens 800°C, so dass selbst bei direkter Flammbeaufschlagung in einem Gasherd keine Materialschäden auftreten.

Aber auch gegenüber metallischen Gar-Behältern bietet der aus Granitkeramik gefertigte Niederdruck-Dampfgarer erhebliche Vorteile. Metallische Behälter können in Mikrowellengeräten nicht genutzt werden, da diese die Mikrowellenstrahlung reflektieren, sodass es zu einer Zerstörung des Mikrowellengerätes kommen kann.

Generell gestatten die harte Oberfläche der Granitkeramik und deren geringe Wasseraufnahme eine Reinigung in der Spülmaschine oder von Hand, auch mit aggressiven Reinigungsmitteln. Granitkeramik ist chemisch inert, so dass keine Oberflächenveränderungen eintreten. Es können sich keine Lebensmittelbestandteile in der Oberfläche festsetzen. Der Gefahr von Schimmelbildung kann auf diese Weise wirksam vorgebeugt werden.

Bei der Herstellung sogenannter Granitkeramik wird der Rohmasse feinkörniges Granitmehl beigemischt. Die gesinterte Keramik ist dicht gebrannt, chemisch inert, bietet Bakterien und Gerüchen kaum Angriffsflächen und kann einfach gereinigt werden, beispielsweise mit einer Seifenlösung oder bei besonderen Anforderungen mit schwachen Säuren und Laugen. Durch Herstellung in Ausformtechnik oder Gießtechnik kann die Materialstärke der Keramik relativ dünn und damit insbesondere die Niederdruckhaube leicht gehalten werden.

Besonders bevorzugt besteht der Niederdruck-Dampfgarer aus einer nicht-glasierten Keramik, deren Keramikrohmasse im Herstellungsprozess Titanoxid beigemischt wurde. Dadurch wird eine bakterizide Oberfläche erzeugt. Das derart ausgerüstete Material ist chemisch inert und lebensmittelgeeignet. An der Oberfläche des Keramikscherbens bilden sich beim Brand über 800°C Anatas- und Rutil-Pigmente als Variationen von Titanoxid. Diese Pigmente sind fotokatalytisch wirksam. Bei Lichtbeaufschlagung in Verbindung mit Luftsauerstoff und Luftfeuchtigkeit bilden sich freie reaktive Hydroxi- und Peroxi-Radikale. Diese freien Radikale reagieren mit ortsnahen organischen Verbindungen (wie z. B. Bakterien) und zerstören sie. Vorzugsweise wird der Keramikrohmasse ca. 2% Titandioxid beigemischt, womit sich ein funktionaler, mikroskopisch sichtbarer Oberflächeneffekt durch Rutil- und Anatas-Pigmente einstellt. Die Pigmente sind in der Keramik gebunden und können nicht abgelöst bzw. ausgeschwemmt werden. Durch diese Maßnahme wirkt die verwendete Keramik bakterizid und erhöht damit die maximale Lagerdauer von Lebensmitteln.

Eine vorteilhafte Ausführungsform zeichnet sich dadurch aus, dass die Grundplatte und deren Halterand sowie der Aufsetzrand der Niederdruckhaube jeweils eine kreisförmige Außenkontur aufweisen, wobei der Außendurchmesser des Aufsetzrandes geringfügig kleiner als der Innendurchmesser des Halterandes ist. Natürlich kommen auch andere Grundformen in Betracht, beispielsweise oval, rechteckig und dergleichen.

Bevorzugt ist die Wassermulde als ein kommunizierendes Kanalsystem in der Gargutfläche gebildet. Insbesondere ist es vorteilhaft, wenn das Kanalsystem der Wassermulde mehrere konzentrisch verlaufende Kanalabschnitte sowie mehrere radial verlaufende Kanalabschnitte umfasst. Das Wasser steht somit gleichmäßig verteilt zur Verfügung, sodass der gebildete Wasserdampf das Gargut allseits umströmt. Zwischen den Kanälen verbleiben abschnittsweise Teile der Gargutfläche.

Besonders vorteilhaft ist eine Ausführungsform, bei welcher die Bodenlinien der Kanalabschnitte in einer unteren Ebene, die Gargutfläche in einer mittleren Ebene und die obere Kante des Halterandes in einer oberen Ebene verlaufen, wobei diese drei Ebenen parallel zueinander verlaufen und wobei die mittlere Ebene näher an der unteren als an der oberen Ebene positioniert ist.

Gemäß einer Ausführungsform besitzen der Aufsetzrand und die Haubenauflagefläche eine Oberflächenrauheit mit einem Mittenrauwert Ra>100pm. Dies führt zu einer hinreichenden Ausformung des Dampfauslassspaltes, der auf diese Weise auch besonders gleichmäßig entlang des Aufsetzrands verteilt ist.

Bei einer abgewandelten Ausführungsform enthält das Keramikmaterial mikrowellenabsorbierende Bestandteile, insbesondere dunkle Glimmermineralien.

Weitere Vorteile und Einzelheiten der Erfindung ergeben sich aus der nachfolgenden Beschreibung einer bevorzugten Ausführungsform, unter Bezugnahme auf die Zeichnung. Es zeigen:
- Fig. 1: eine Draufsicht einer Ausführungsform einer Grundplatte eines erfindungsgemäßen Niederdruck-Dampfgarers;
- Fig. 2: eine perspektivische Ansicht einer Niederdruckhaube eines Niederdruck-Dampfgarers;
- Fig. 3: eine Schnittansicht des Niederdruck-Dampfgarers.

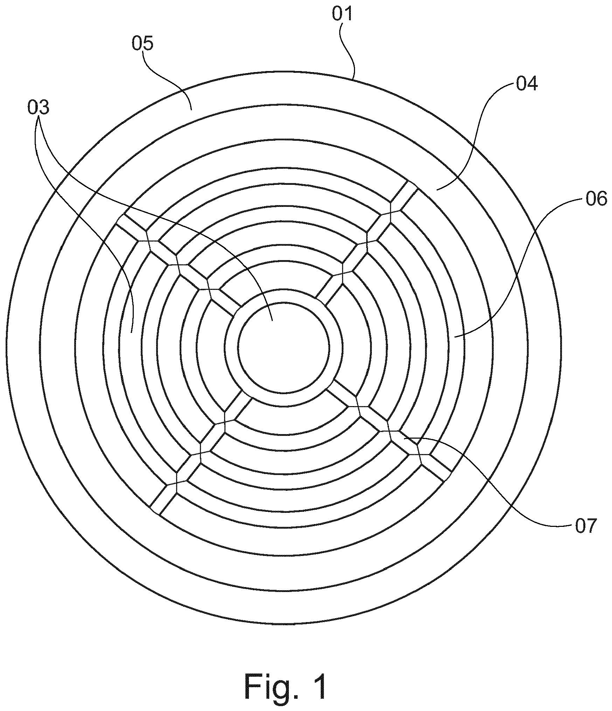

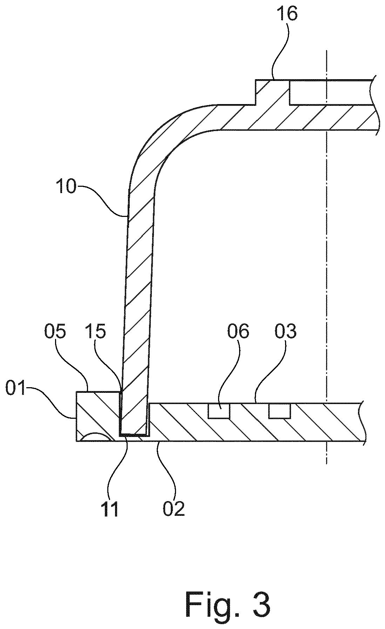

In Fig. 1 ist eine scheiben- oder tellerförmige Grundplatte 01 eines erfindungsgemäßen Niederdruck-Dampfgarers in einer vereinfachten Draufsicht gezeigt. Die Grundplatte 01 besitzt eine Bodenfläche 02 (Fig. 3) und eine dieser gegenüberliegende Gargutfläche 03. In der dargestellten Ausführungsform ist die Gargutfläche 03 durch zahlreiche Abschnitte gebildet, die bevorzugt in einer gemeinsamen mittleren Ebene liegen. Die Gargutfläche besitzt im äußeren Bereich eine Haubenauflagefläche 04 mit einem umlaufenden, erhabenen Halterand 05. Die Grundplatte besitzt beispielsweise einen Durchmesser D_{G} =24 cm, eine Höhe H_{G} =1,5 cm und bei diesen beispielhaften Abmessungen ein Gewicht von etwa G_{G} =1.080 g.

Die Gargutfläche 03 besitzt mindestens eine Wassermulde, die in der gezeigten Ausführungsform durch konzentrisch verlaufende Kanalabschnitte 06 sowie radial verlaufende Kanalabschnitte 07 gebildet ist, die miteinander in Verbindung stehen. Bevorzugt sind alle Kanalabschnitte mit gleicher Tiefe ausgebildet und ihre Bodenlinien erstrecken sich somit in einer gemeinsamen unteren Ebene. Die Wassermulde 06, 07 dient zur Aufnahme von Wasser während des Garvorgangs. Die Wassermulde besitzt vorteilhaft ein Volumen V_{M} =30 ml.

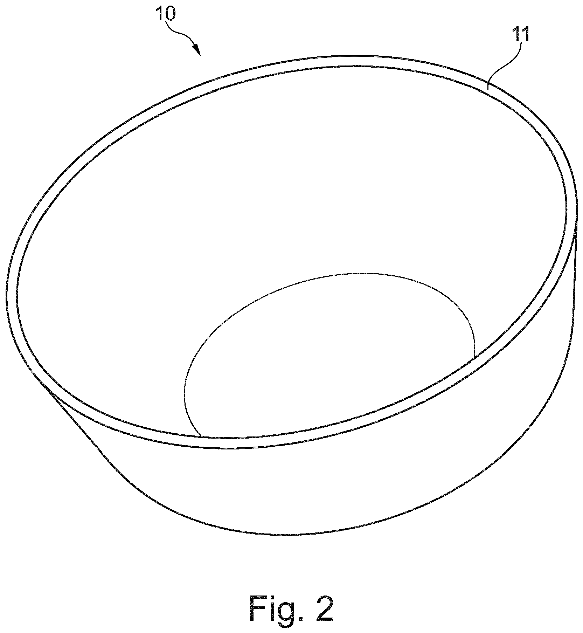

Fig. 2 zeigt in einer perspektivischen Ansicht eine schüsselförmige Niederdruckhaube 10, welche den zweiten Bestandteil des Niederdruck-Dampfgarers bildet. Die Niederdruckhaube 10 besitzt beispielsweise ein Haubenvolumen V_{H} =1.700 ml, einen Durchmesser D_{H} =20,5 cm, eine Höhe H_{H} =9,5 cm und bei diesen Abmessungen beispielsweise ein Gewicht G_{V} =1.170 g.

Die Niederdruckhaube 10 besitzt in der Ebene ihrer Öffnung einem Aufsetzrand 11, dessen Kontur komplementär zum Verlauf des Halterands 05 der Grundplatte 01 geformt ist, sodass der Aufsetzrand 11 vom Halterand 05 umschlossen ist, wenn der Aufsetzrand der Niederdruckhaube auf der Haubenauflagefläche der Grundplatte aufsitzt (Fig. 3).

Die Grundplatte 01 und die Niederdruckhaube 10 sind jeweils einstückig aus einem nicht-glasierten keramischen Material geformt, dessen Keramikrohmasse Granitmehl beigemischt wurde. Auch bei abgewandelten Abmessungen beträgt das Wasseraufnahmevolumen V_{M} der Wassermulde etwa 1% bis 2% des Haubenvolumens VH, vorzugsweise 1,5% bis 1,9%, besonders bevorzugt 1,764%. Die Wasseraufnahme der gesinterten Granitkeramik ist mit der von Porzellan bzw. Feinsteinzeug ähnlich und ist vorzugsweise <0,5%. Die Keramik soll über eine hohe Wärmekapazität verfügen, damit eine gleichmäßige Wärmeabgabe an das Gargut erfolgt. Weiterhin dient eine gute Wärmespeicherung dazu, die Speisen nach der Garung lange warm zu halten. Die Wärmekapazität der Granitkeramik beträgt je nach Zusammensetzung bis ca. 1,2 J g⁻¹ K⁻¹. Damit ist eine im Vergleich zu Stahl erhöhte Wärmespeicherleistung gegeben. Die Granitkeramik wird von Mikrowellenstrahlung angeregt und dadurch erwärmt. Die Granitkeramik nimmt andererseits nicht so viel der Mikrowellenstrahlung auf, dass die Wirkung auf das Gargut zu gering würde. Das der Keramik-Rohmasse zugegebenen Granitmehl enthält Quarz, Feldspat und Glimmer. Insbesondere durch die enthaltenen dunklen Glimmerminerale wird Mikrowellenstrahlung absorbiert, das Material erwärmt sich im Gegensatz zu weißem Porzellan deutlich stärker.

Fig. 3 zeigt in einer geschnittenen Ansicht den Niederdruck-Dampfgarer in zusammengesetzter Form, so wie er zum Garen von Speisen verwendet wird. Es ist ersichtlich, dass der Aufsetzrand 11 der Niederdruckhaube auf der Haubenauflagefläche 04 aufsitzt und am äußeren Umfang vom Halterand 05 umschlossen ist. Die zueinander gerichteten Oberflächen des Aufsetzrands 11 und der Haubenauflagefläche 04 sind, vorzugsweise durch erhöhte Oberflächenrauheit, so gebildet, dass zwischen diesen mindestens abschnittsweise ein Dampfauslassspalt 15 verbleibt, durch welchen der beim Erhitzen entstehende Wasserdampf austreten kann. Damit der bei der Benutzung entstehende Wasserdampf entweichen kann, darf die Haube mit der Grundplatte nicht dicht abschließen. Dies wird durch die Verwendung von groben Massebestandteilen in der Keramik gewährleistet. Die Bestandteile sind bis zu 2 mm groß. Dadurch ist die Kontaktfläche immer so gestaltet, dass Wasserdampf ab einem Druck von mehr als 1 bar entweichen kann.

In Fig. 3 ist außerdem ersichtlich, dass die Niederdruckhaube 10 an ihrer dem Aufsetzrand gegenüberliegenden Oberseite eine nach außen gerichtete Standfläche 16 besitzt. Die Standfläche 16 wird genutzt, wenn die Niederdruckhaube nach dem Garvorgang als Schüssel verwendet wird.

### Bezugszeichen

- 01: Grundplatte
- 02: Bodenfläche
- 03: Gargutfläche
- 04: Haubenauflagefläche
- 05: Halterand
- 06: konzentrisch verlaufende Kanalabschnitte der Wassermulde
- 07: radial verlaufende Kanalabschnitte der Wassermulde

- 10: Niederdruckhaube
- 11: Aufsetzrand

- 15: Dampfauslassspalt
- 16: Standfläche

## Patentansprüche

1. Niederdruck-Dampfgarer umfassend:
- eine Grundplatte (01) mit einer Bodenfläche (02) und einer dieser gegenüberliegenden Gargutfläche (03), wobei die Gargutfläche (03) eine Haubenauflagefläche (04) mit einem umlaufenden, erhabenen Halterand (05) aufweist, und wobei die Gargutfläche (03) mindestens eine Wassermulde (06, 07) zur Aufnahme von Wasser aufweist;
- eine Niederdruckhaube (10) mit einem schüsselförmigen Haubenvolumen und einem Aufsetzrand (11), dessen Kontur komplementär zum Verlauf des Halterandes (05) der Grundplatte (01) geformt ist, sodass der Aufsetzrand (11) vom Halterand (05) umschlossen ist, wenn der Aufsetzrand (11) auf der Haubenauflagefläche (04) aufsitzt;
**dadurch gekennzeichnet, dass** die Grundplatte (01) und Niederdruckhaube (10) jeweils aus einem nicht-glasierten keramischen Material geformt sind, dessen Keramikrohmasse Granitmehl beigemischt wurde; wobei die Wassermulde (06, 07) ein Wasseraufnahmevolumen im Bereich 1% bis 2% des Haubenvolumens besitzt; und wobei die zueinander gerichteten Oberflächen des Aufsetzrands (11) sowie der Haubenauflagefläche (04) so geformt sind, dass zwischen diesen mindestens abschnittsweise ein Dampfauslassspalt (15) verbleibt.

2. Niederdruck-Dampfgarer nach Anspruch 1, **dadurch gekennzeichnet, dass** die Grundplatte (01) und deren Halterand (05) sowie der Aufsetzrand (11) der Niederdruckhaube (10) jeweils eine kreisförmige Außenkontur aufweisen, wobei der Außendurchmesser des Aufsetzrandes (11) geringfügig kleiner als der Innendurchmesser des Halterandes (05) ist.

3. Niederdruck-Dampfgarer nach Anspruch 1 oder 2, **dadurch gekennzeichnet, dass** die Wassermulde (06, 07) durch ein kommunizierendes Kanalsystem in der Gargutfläche (03) gebildet ist.

4. Niederdruck-Dampfgarer nach Anspruch 3, **dadurch gekennzeichnet, dass** das Kanalsystem der Wassermulde (06, 07) mehrere konzentrisch verlaufende Kanalabschnitte (06) sowie mehrere radial verlaufende Kanalabschnitte (07) umfasst.

5. Niederdruck-Dampfgarer nach Anspruch 4, **dadurch gekennzeichnet, dass** die Bodenlinien der konzentrisch verlaufenden Kanalabschnitte (06) und der radial verlaufenden Kanalabschnitte (07) in einer unteren Ebene, die Gargutfläche (03) in einer mittleren Ebene und die obere Kante des Halterandes (05) in einer oberen Ebene verlaufen, wobei diese drei Ebenen parallel zueinander verlaufen und wobei die mittlere Ebene näher an der unteren als an der oberen Ebene positioniert ist.

6. Niederdruck-Dampfgarer nach einem der Ansprüche 1 bis 5, **dadurch gekennzeichnet, dass** der Aufsetzrand (11) und die Haubenauflagefläche (04) eine Oberflächenrauheit mit einem Mittenrauwert Ra>100pm aufweisen.

7. Niederdruck-Dampfgarer nach einem der Ansprüche 1 bis 6, **dadurch gekennzeichnet, dass** die Niederdruckhaube (10) an ihrer dem Aufsetzrand (11) gegenüberliegenden Oberseite eine nach Außen gerichtete Standfläche (16) aufweist.

8. Niederdruck-Dampfgarer nach einem der Ansprüche 1 bis 7, **dadurch gekennzeichnet, dass** Grundplatte (01) und Niederdruckhaube (10) aus einem wasserdichten Keramikmaterial bestehen.

9. Niederdruck-Dampfgarer nach Anspruch 8, **dadurch gekennzeichnet, dass** das Keramikmaterial mikrowellenabsorbierende Bestandteile enthält, insbesondere dunkle Glimmermineralien.

10. Niederdruck-Dampfgarer nach einem der Ansprüche 1 bis 9, **dadurch gekennzeichnet, dass** bei der Herstellung der Grundplatte (01) und der Niederdruckhaube (10) der Keramikrohmasse Titanoxid beigemischt wurde.

## Claims

1. A low-pressure steam cooker comprising:
- a base plate (01) with a bottom surface (02) and a cooked product surface (03) lying opposite the latter, wherein the cooked product surface (03) comprises a hood seating surface (04) with a peripheral, raised holding rim (05), and wherein the cooked product surface (03) comprises at least one water trough (06, 07) for holding water;
- a low-pressure hood (10) with a bowl-shaped hood volume and a seating rim (11), the contour of which is formed complementary to the course of the holding rim (05) of the base plate (1), so that the seating rim (11) is enclosed by the holding rim (05) when the seating rim (11) sits on the hood seating surface (04);
**characterised in that**
the base plate (01) and the low-pressure hood (10) are each formed from a non-glazed ceramic material, in the ceramic raw mixture whereof granite meal has been mixed; wherein the water trough (06, 07) has a water holding volume in the range from 1 % to 2 % of the hood volume; and wherein the surfaces of the seating rim (11) and the hood seating surface (04) pointing towards one another are formed in such a way that a steam outlet gap (15) remains at least in sections between the latter.

2. The low-pressure steam cooker according to claim 1, **characterised in that** the base plate (01) and its holding rim (05) as well as the seating rim (11) of the low-pressure hood (10) each have a circular external contour, wherein the external contour of the seating rim (11) is slightly smaller than the internal diameter of the holding rim (05).

3. The low-pressure steam cooker according to claim 1 or 2, **characterised in that** the water trough (06, 07) is formed by a communicating channel system in the cooked product surface (3).

4. The low-pressure steam cooker according to claim 3, **characterised in that** the channel system of the water trough (06, 07) comprises a plurality of concentrically running channel sections (06) and a plurality of radially running channel sections (07).

5. The low-pressure steam cooker according to claim 4, **characterised in that** the bottom lines of the concentrically running channel sections (06) and the radially running channel sections (07) run in a lower plane, the cooked product surface (03) runs in a central plane and the upper edge of the holding rim (05) runs in an upper plane, wherein these three planes run parallel to one another and wherein the central plane is positioned closer to the lower than to the upper plane.

6. The low-pressure steam cooker according to any one of claims 1 to 5, **characterised in that** the seating rim (11) and the hood seating surface (04) have a surface roughness with an average roughness value Ra>100µm.

7. The low-pressure steam cooker according to any one of claims 1 to 6, **characterised in that** the low-pressure hood (10) comprises a stand surface (16) pointing outwards at its upper side lying opposite the seating rim (11).

8. The low-pressure steam cooker according to any one of claims 1 to 7, **characterised in that** the base plate (01) and low-pressure hood (10) consist of a watertight ceramic material.

9. The low-pressure steam cooker according to claim 8, **characterised in that** the ceramic material contains microwave-absorbing components, in particular dark mica minerals.

10. The low-pressure steam cooker according to any one of claims 1 to 9, **characterised in that** titanium oxide is mixed with the ceramic raw mixture in the production of the base plate (01) and the low-pressure hood (10).

## Revendications

1. Cuiseur à vapeur basse-pression, comprenant :
- une plaque d'embase (01), pourvue d'une surface (02) de fond inférieur et d'une surface (03) pour aliments à cuire qui est placée au vis-à-vis de celle-ci, la surface (03) pour aliments à cuire comportant une surface (04) d'appui de capot, pourvue d'un bord de retenue (05) périphérique surélevé et la surface pour aliments à cuire (03) comportant au moins un cavité à eau (06, 07), destinée à accueillir de l'eau ;
- un capot (10) basse-pression, doté d'un volume de capot en forme de cuvette et d'un bord de pose (11), dont le contour est façonné de manière complémentaire au trajet du bord de retenue (05) de la plaque d'embase (01), de telle sorte que le bord de pose (11) soit entouré par le bord de retenue (05) lorsque le bord de pose (11) repose sur la surface (04) d'appui de capot ;
**caractérisé en ce que** la plaque d'embase (01) et le capot (10) basse-pression sont façonnés chacun en une matière céramique non-émaillée, à la masse céramique brute de laquelle a été mélangée de la farine de granit ;
la cavité à eau (06, 07) ayant un volume d'accueil d'eau de l'ordre de 1 % à 2 % du volume du capot ; et les surfaces du bord de pose (11) ainsi que de la surface (04) d'appui de capot qui se font face étant façonnées de telle sorte qu'entre celles-ci, il subsiste au moins par endroits une fente (15) d'évacuation de vapeur.

2. Cuiseur à vapeur basse-pression selon la revendication 1, **caractérisé en ce que** la plaque d'embase (01) et son bord de retenue (05), ainsi que le bord de pose (11) du capot (10) basse-pression présentent chacun un contour extérieur de forme circulaire, le diamètre extérieur du bord de pose (11) étant légèrement inférieur au diamètre intérieur du bord de retenue (05) .

3. Cuiseur à vapeur basse-pression selon la revendication 1 ou 2, **caractérisé en ce que** la cavité à eau (06, 07) est constituée d'un système de canalisation communicant dans la surface pour aliments à cuire (03) .

4. Cuiseur à vapeur basse-pression selon la revendication 3, **caractérisé en ce que** le système de canalisation de la cavité à eau (06, 07) comprend plusieurs segments de canalisation (06) s'écoulant sous forme concentrique, ainsi que plusieurs segments de canalisation (07) s'écoulant en direction radiale.

5. Cuiseur à vapeur basse-pression selon la revendication 4, **caractérisé en ce que** les lignes de fond inférieur des segments de canalisation (06) s'écoulant sous forme concentrique et des segments de canalisation (07) s'écoulant en direction radiale s'écoulent dans un plan inférieur, la surface pour aliments à cuire (03) s'écoule dans un plan médian et l'arête supérieure du bord de retenue (05) s'écoule dans un plan supérieur, lesdits trois plans s'écoulant à la parallèle les uns des autres et le plan médian étant positionné plus près du plan inférieur que du plan supérieur.

6. Cuiseur à vapeur basse-pression selon l'une quelconque des revendications 1 à 5, **caractérisé en ce que** le bord de pose (11) et la surface (04) d'appui de capot présentent une rugosité de surface d'une rugosité moyenne Ra > 100 µm.

7. Cuiseur à vapeur basse-pression selon l'une quelconque des revendications 1 à 6, **caractérisé en ce que** sur sa face située au vis-à-vis du bord de pose (11), le capot (10) basse-pression comporte une surface de support (16) dirigée vers l'extérieur.

8. Cuiseur à vapeur basse-pression selon l'une quelconque des revendications 1 à 7, **caractérisé en ce que** la plaque d'embase (01) et le capot (10) basse-pression consistent dans une matière céramique étanche à l'eau.

9. Cuiseur à vapeur basse-pression selon la revendication 8, **caractérisé en ce que** la matière céramique comprend des composants absorbant les micro-ondes, notamment des minéraux mica sombres.

10. Cuiseur à vapeur basse-pression selon l'une quelconque des revendications 1 à 9, **caractérisé en ce que** lors de la production de la plaque d'embase (01) et du capot (10) basse-pression, de l'oxyde de titane a été mélangé à la masse de céramique brute.
